# EUROPEAN PATENT SPECIFICATION

(11) **EP 2 047 291 B1**
(45) Date of publication and mention of the grant of the patent: **16.09.2009**
(21) Application number: 07733757.4
(22) Date of filing: 14.06.2007
(51) Int. Cl.: G01S 7/14, G01S 7/24, G01S 13/86, G01S 13/93, G01S 13/72

(54) **RADAR DISPLAY AND PROCESSING APPARATUS**
RADARANZEIGE UND VERARBEITUNGSVORRICHTUNG
AFFICHAGE RADAR ET APPAREIL DE TRAITEMENT

(30) Priority: 03.08.2006 GB 0615426
(43) Date of publication of application: 15.04.2009
(73) Proprietor: Samarai, Faris, Aberdeen AB2 0PD (GB)
(72) Inventor: Samarai, Faris, Aberdeen AB2 0PD (GB)
(74) Representative: Jones, Keith William
(86) International application number: PCT/GB2007/050336
(87) International publication number: WO 2008/015467

(56) References cited:
- WO-A-20/05095200
- GB-A- 2 428 151
- US-A- 5 638 281
- US-A1- 2003 028 294

## Description

The present invention relates to a radar apparatus and in particular, a radar display and processing apparatus having a target identification means.

### Background of the Invention

One of the major uses of radar systems is for tracking the movement of sea-vessels for the detection of immigration, customs and fishing violations. Since sea-vessels may navigate at distances far outside the range of land-based radar systems, these targets are typically tracked by airborne radar systems.

An airborne maritime surveillance radar (MSR) system typically operates in a plan position indicating (PPI) mode, which maintains the elevation angle of the radar constant but varies the radar's azimuth angle. This enables the signal returned from the sea/land surface (and vessels thereon) (i.e. the return signal) to be mapped onto a single horizontal plane.

There are two main forms of airborne MSR systems, namely circular scanning MSR (or surveillance scan MSR) and sector scanning MSR. The operation of these two airborne MSR systems will now be described with reference to the accompanying drawings in which:
Figure 1 shows the detection field of a sector scanning MSR apparatus; and
Figure 2 shows a typical scenario in which a host aircraft that has used a sector scanning MSR system to detect a target vessel changes heading.

### (a) Circular Scanning MSR

In a circular scanning MSR system a radar antenna is mounted on the lower belly of an aircraft's (i.e. a host aircraft's) fuselage and is mechanically rotated through 360° to scan the land and sea in all directions below the host aircraft. The return signals are then used to calculate the speed and heading of detected target vessels. The resulting data are then typically displayed to a radar operator via a North-up display.

In a North-up display, the top of the screen is always designated as pointing to geographic/magnetic North and data from an on-board electronic compass etc. is used to display the position and heading of the host-aircraft. The positions of the detected target vessels are placed on the indicator display relative to the aircraft symbol. The indicator display further includes the scaled range and bearing of the target vessels to the host aircraft. Using this display, the heading of a target vessel can be readily estimated from successive readings of the target vessel's past movements.

### (b) Sector Scanning MSR

In a sector scanning MSR system a radar antenna is mounted on the nose of a host aircraft and (in contrast with the continuous rotational motion of the circular scanning MSR system) is mechanically swept by a cantilever-type of arrangement, back and forth between two azimuth bearings. The restricted angular range (α) of a sector scanning MSR apparatus limits the radar antenna to scanning to the front of the host aircraft and to a limited extent around the sides of the host aircraft.

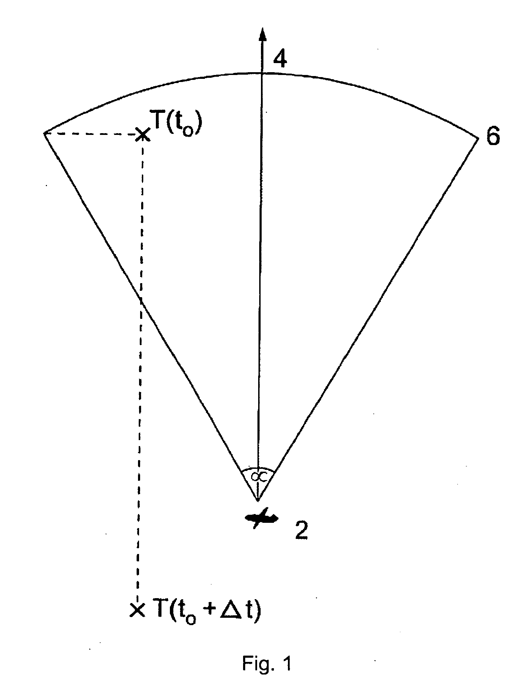

Figure 1 provides an example of the detection field of a sector scanning MSR apparatus. For this example, assume that a host aircraft 2 is travelling along a flight-path 4. In this case, the detection field of the sector scanning radar mounted in the host aircraft 2 is a cone-shaped region 6 with sector scan angle α. In addition, let a target vessel T detected in the detection field 6 at time to be designated by T(tₒ).

Assuming that the host aircraft 2 continues along the same flight-path 4 for a time period Δt, the host aircraft 2 will eventually pass the target vessel T and the target vessel T will be located behind the host aircraft 2 at position T(tₒ + Δt). Since the cone-shaped detection field 6 of the sector scanning MSR apparatus is mainly focussed to the front of the host aircraft 2, the target vessel T will no longer be within the range of the sector scanning MSR apparatus and will not be represented on the radar display.

From the above example, it can be seen that it would be normal for a target vessel to spend the majority of a host aircraft's mission time as an off-screen target (i.e. a target that is not in the sector scanning MSR system's detection field).

When a target vessel has been detected and passed by a host aircraft, the radar operator is required to remember the target vessel's position whilst the target vessel remains out of the detection range of the host aircraft's sector scanning MSR apparatus. However, during this time, the target vessel may have moved away from the position where it was first sighted. In this case, whilst a search pattern may eventually return the host aircraft to the vicinity of the target vessel, the radar operator could confuse various previously off-screen targets, especially if the previously off-screen targets are in close proximity to each other or their paths have crossed.

To further complicate the task of the radar operator, sector scanning MSR systems typically employ aircraft stabilised displays that show the host aircraft at a fixed display position (i.e. at the bottom of the display, the nose of the aircraft pointing to the twelve o'clock position) and show the locations of the target vessels at display positions relative to the host aircraft. In this case, the movement of the target vessels or the host aircraft is shown in the aircraft stabilised display by the rotation of the symbols representing the target vessel around the symbol representing the host aircraft.

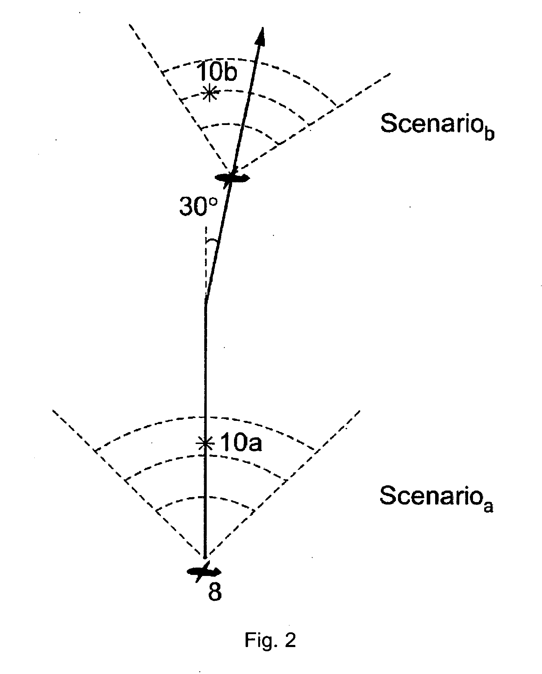

For example consider the situation depicted in Figure 2. In Scenarioₐ a host aircraft 8 is heading North (aircraft heading 000°) and there is a target vessel 10a located straight ahead of the host aircraft 8. However, if in a Scenario_{b}, the host aircraft 8 was to turn to a heading of 030° the symbol representing the host aircraft would remain pointed at the 12 o'clock position in the aircraft stabilised display. However, the target vessel 10b would no longer be represented in the aircraft stabilised display as being in line with the host aircraft 8 heading and would instead be rotated to the 11 o'clock position on the aircraft stabilised display. Consequently, in order for the radar operator to determine the heading of a target vessel, the operator would first have to determine the heading of the host aircraft. Having determined the heading of the host aircraft, the radar operator could then use this parameter to determine the heading of the target vessel based on the angular displacement of the target vessel symbol on the aircraft stabilised display.

In view of the above, it can be readily seen that the aircraft stabilised display does not provide information regarding the movements target vessels in the conveniently accessible manner of a North-up display. Furthermore, the aircraft stabilised display does not provide information regarding off-screen targets. However, it should be noted that the previously described North-up display mode does not show off-screen targets either.

### (c) Track While Scan (TWS) Algorithm

Track while scan (TWS) algorithms are well-known techniques that combine the functions of radar searching and tracking to enable a number of targets to be tracked simultaneously. Whereas in a pure scanning technique, a radar operator must decide whether a target detected on a current scan is the same as a target detected in a previous scan, the TWS algorithm attempts to make this decision automatically.

Typically a TWS algorithm includes the following steps :
(1) detect a target and pre-process its return signal;
(2) correlate any new observations with the tracks of any existing targets;
(3) if a new observation does not correlate with any existing target tracks, establish a new target track for the observation;
(4) compare the new observations with predicted positions of existing targets;
(5) update the prediction model on the basis of the difference between the predicted target position and the new observations; and
(6) display and calculate predictions of target future positions

United States Patent Publication No. 2003/0028294A1 and International Patent Publication No. WO 2005/095200 describe vehicle information display apparatus in which both radar identified targets and Automatic Identification System (AIS) identified targets are combined on the same display.

International Patent Application WO2005088340 discloses a TWS system which combines a north-up display and a 12 o'clock position aircraft stabilised display for a sector scanning MSR. An operator of a radar display according to WO2005088340 can view predicted positions of historical targets in the north-up display as well as the current direction of the aircraft stabilised display. However, targets identified are given a identification tag issued by the system. This is not related to the target itself but rather is a function of the system.

### Summary of the Invention

According to the invention there is provided a radar display and processing apparatus adapted to emit a radar signal across a range and detect a return signal within said range, predict and display the positions of a first plurality of targets currently out of said range and previously detected by said return signal, the positions of said first plurality of targets are predicted from at least one radar return signal previously detected from the first plurality of targets within said range and the apparatus further comprising a receiver adapted to detect one or more target identification transmissions and a correlation means to correlate each received target identification transmissions with one of the plurality of targets.

Preferably, the radar display and processing apparatus displays the positions of a second plurality of targets being currently detected targets and the first plurality of targets wherein the first plurality of targets and the second plurality of targets are disposed at 360° around the radar display and processing apparatus.

Desirably, the radar display and processing apparatus employs a tracking algorithm to predict the position of the first plurality of targets.

Preferably, the target identification transmissions include latitude and longitude co-ordinates enabling precise location of targets.

Preferably, the target identification transmission includes identification data and each of the plurality of targets which has been correlated with a target identification transmission is displayed on the radar display along with the identification data.

Preferably, the target identification transmissions are Automatic Identification System (AIS) transmissions from waterborne vessels.

Preferably, each of the plurality of targets which have not been correlated with a target identification transmission is indicated on the radar display as not transmitting a target identification transmission.

Desirably, the radar display and processing apparatus is for use with a sector scanning radar apparatus.

Alternatively, the radar display and processing apparatus is for use with a 360 degree circular scanning radar apparatus.

Desirably, the radar display and processing apparatus is mounted in an aircraft.

Preferably, the radar display and processing apparatus comprises a North-up display.

Preferably, the radar display and processing apparatus also comprises an aircraft stabilised radar display.

Desirably, the radar display and processing apparatus is used for maritime surveillance.

According to a second aspect of the present invention there is also provided radar apparatus comprising radio wave emitting means, reflected radio wave receiving means, processing means, storage means, prediction means and display means, said radio wave emitting means is adapted to emit a radio wave to be reflected from at least a first target vessel and the reflected radio wave is received by said reflected radio wave receiving means and processed by said processing means in order to calculate the position, speed and heading attributes of said at least one first target vessel and the position, speed and heading attributes of said at least one first target vessel are stored in said storage means and displayed on said display means, and the previously stored position, speed and heading attributes calculated for at least a second target vessel that is no longer reflecting the radio waves emitted by said radio wave emitting means, are transmitted to said prediction means to predict the current position, speed and heading attributes of said at least one second target vessel, the predicted current position, speed and heading attributes of said at least one second target vessel being also transmitted to said display means, wherein the apparatus further comprises a receiver adapted to detect one or more target identification transmissions and a correlation means to correlate each received target identification transmissions with one of the plurality of targets.

According to a third aspect of the invention there is provided a method of providing information regarding a first plurality of targets and a second plurality of targets disposed at 360° around a sector scanning radar apparatus, wherein the first plurality of targets were previously detected by the sector scanning radar apparatus but are currently out of range of the sector scanning radar apparatus and the second plurality of targets are currently detected by the sector scanning radar apparatus; wherein the method of providing information regarding the first and second plurality of targets comprises the steps of:-
detecting the return signals from at least one of said second plurality of targets;
displaying the positions of the at least one of said second plurality of targets;
using a previously detected return signal from at least one of said first plurality of targets to predict the position of the at least one of said first plurality of targets;
displaying the positions of said first plurality of targets;
correlating the first and second plurality of targets with target identification transmissions from one or more of the first and second plurality of targets; and
displaying target identification data from the target identification transmissions for each of the correlated first and second plurality of targets.

Preferably, the method of providing information regarding a first plurality of targets and a second plurality of targets disposed at 360° around a sector scanning radar apparatus also comprises a step of recognising at least one of the first plurality of targets that is currently detected by the sector scanning radar apparatus.

### Description and Drawings

An embodiment of the radar display and processing apparatus will be described with reference to its use with a sector scanning surveillance radar. Accordingly, for the sake of clarity, the radar display and processing apparatus will be referred to hence forth as a sector scanning radar display apparatus. However, the invention is equally applicable to a 360 degree circular scanning surveillance radar.

An embodiment of the invention will now be described by way of example only with reference to the accompanying drawings in which :

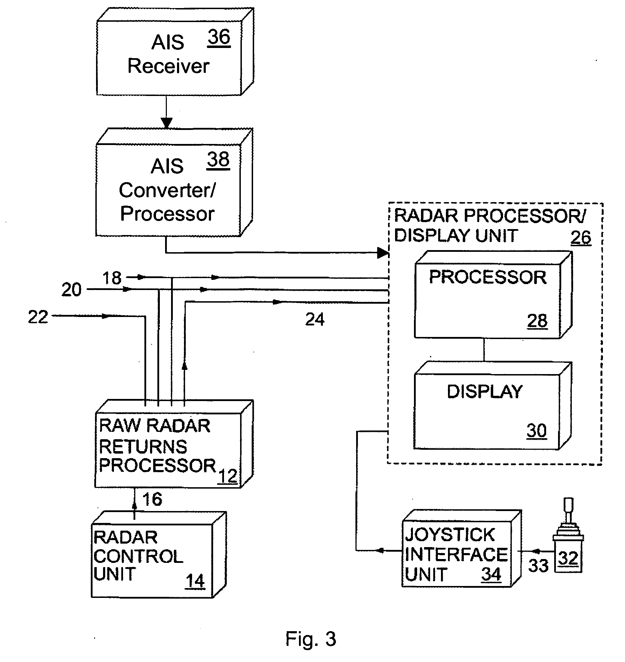

Figure 3 is a block diagram of the sector scanning radar display apparatus in accordance with a first embodiment of the invention;

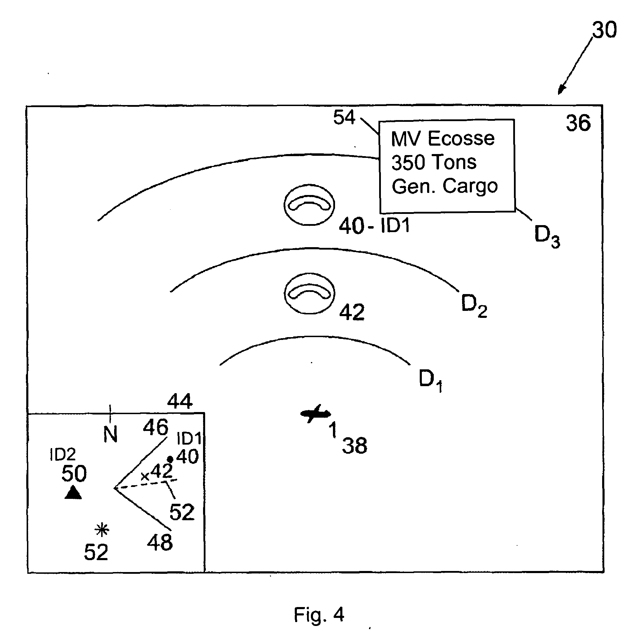

Figure 4 is a simplified screen shot from a display unit of the sector scanning radar display apparatus shown in Figure 3, showing target identification data;

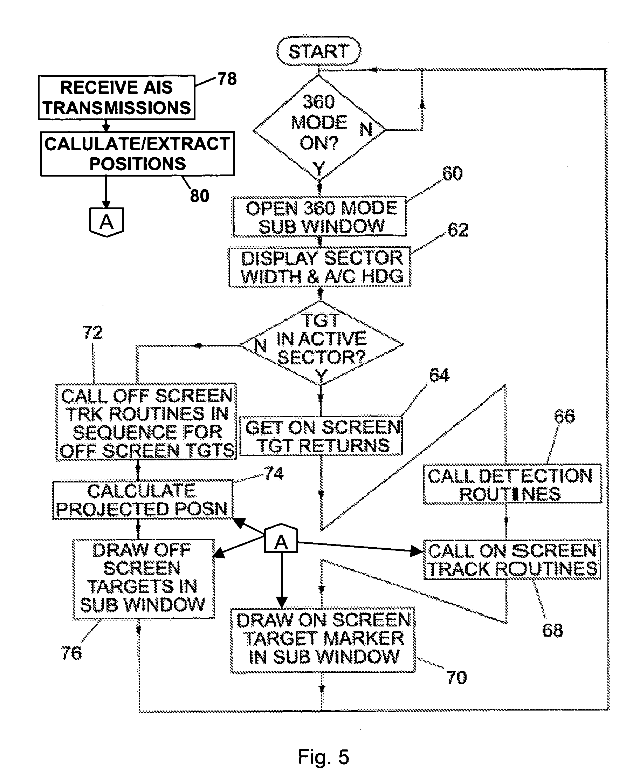

Figure 5 is a flowchart of the operation of the sector scanning radar display apparatus shown in Figure 3.

### (a) Sector Scanning MSR Apparatus

The sector scanning radar apparatus comprises a raw radar returns processor unit 12 that operates under the control of a control unit 14 via control signal 16. The raw radar returns processor unit 12 uses aircraft area navigational data 18 (which comprises information regarding the host aircraft's present location, ground speed and attitude), antennae array azimuth data 20 and raw radar returns data 22 to plot the radar return data from detected target vessels in a single plane representation array. The single plane representation array is then output from the raw radar returns processor 12 as a video signal 24 and transmitted to the sector scanning radar display apparatus 26. The sector scanning radar display apparatus 26 comprises a processor unit 28 and a display unit 30. The sector scanning radar display apparatus 26 also receives the antennae array azimuth data 20 and the aircraft area navigational data 18. The sector scanning radar display apparatus 26 transmits the data to the processor unit 28 to calculate the heading and speed of both off-screen and on-screen target vessels. The resulting data are transmitted to the display unit 30 for presentation to a user.

Furthermore, a target identification receiver 36, in this case an Automatic Identifications System (AIS) receiver, receives target identification transmission from targets within range. The information from the target identification receiver is processed by a target identification processor 38, in this case an AIS processor/converter. In this example, AIS is a maritime protocol and the information contained in the maritime protocol must be processed and converted into a format suitable for airborne systems and, in particular, that of the radar apparatus of the present invention.

Although other target identification protocols are envisaged as compatible with the system, the maritime AIS system is described, as an example, for the remainder of the description.

AIS is a system used by ships and vessel traffic systems (VTS) principally for identification of vessels at sea. AIS was implemented to resolve the difficulty of identifying ships when not in sight (e.g. at night, in fog, in radar blind arcs or shadows or at distance) by providing a means for ships to exchange identification information, position, course, speed and other ship data with all other nearby ships and VTS stations. It works by integrating a standardized VHF transceiver system with a GPS (Global Positioning System) receiver and other navigational equipment on board ship (Gyro compass, Rate of turn indicator, etc.).

The International Maritime Organization (IMO) SOLAS (International Convention for the Safety of Life at Sea) requires AIS to be fitted aboard all ships greater than/equal to 300 gross tons for international voyages.

AIS transceiver typically sends the following data every 2 to 10 seconds depending on vessels speed while underway, and every 3 minutes while vessel is at anchor. This data includes:
MMSI (Maritime Mobile Service Identity) number of vessel - vessel's unique identification;
Navigation status - "at anchor", "under way using engine(s)", "not under command", etc;
Rate of turn - right or left, 0 to 720 degrees per minute;
Speed over ground - 0.1 knot resolution from 0 to 102 knots;
Position accuracy;
Longitude - to 1/10000 minute and Latitude - to 1/10000 minute;
Course over ground - relative to true north to 0.1 degree;
True Heading - 0 to 359 degrees from eg. gyro compass; and
Time stamp - UTC time accurate to nearest second when this data was generated.

In addition, the following data is typically broadcast every 6 minutes:
MMSI number - vessel's unique identification;
IMO number - number remains unchanged upon transfer of the ship to other flag(s);
Radio call sign - international radio call sign assigned to vessel;
Name - Name of vessel, max 20 characters;
Type of ship/cargo;
Dimensions of ship - to nearest meter;
Location of positioning system's (eg. GPS) antenna onboard the vessel;
Type of positioning system - usually GPS or DGPS (Differential Global Positioning System);
Draught of ship - 0.1 meter to 25.5 meters;
Destination - max 20 characters; and
ETA (estimated time of arrival) at destination - UTC month/date hour:minute.

Various operations of the sector scanning radar display apparatus 26 may also be controlled by the user by means of a joystick 32 which transmits a control signal 33 to a joystick interface unit 34. The joystick interface unit 34 processes and compresses the control signal 33 before transmitting it to the sector scanning radar display apparatus 26 to control the movement of an on-screen cursor.

Turning to Figure 4, the display unit 30 presents a conventional aircraft stabilised display 36 with the host aircraft 38 displayed at the bottom of the screen (pointing to the 12 o'clock position). The display further includes arcs D₁, D₂ and D₃ showing the sector scanning radar's detection field at different distances from the host aircraft 38. Targets 40 and 42 within the detection field of the sector scanning radar (also known as on-screen targets) are depicted between the arcs D₁, D₂ and D₃ in accordance with their distance from the host aircraft 38.

In this case, target 40 is emitting an AIS target identification transmission and, as such, the system is displaying its identification data, which in this case is ID1. Furthermore, a "pop-up" display 54 is available with further information from the AIS data including the vessel name, tonnage and type of ship. Target 42 is not emitting an AIS target identification transmission and therefore no identification information is displayed.

To enhance the radar operator's awareness of their current situation, a North-up sub-display window 44 is included in an "out of sector" region of the active screen area 36. Within the North-up sub-display window 44, a pair of solid lines 46, 48 depict the sector scanning radar's detection field.

The sector scanning angle α is reflected in the angle between the solid lines 46 and 48. Off-screen targets 50, 52 and on-screen targets 40,42 are displayed on the North-up sub-display 44 with a central dotted line 52 depicting the heading of the host aircraft. Consequently, the North-up sub-display window provide the operator of the sector scanning MSR with an awareness of the status of targets disposed at 360° around the host aircraft.

Furthermore, in the North-up sub-display 44, off-screen target 52 is emitting an AIS target identification transmission and, as such, the system is displaying its identification data. The positioning of off screen targets, as discussed below, is typically predicted based on last known information. However, if an off-screen target, such as target 52, is emitting an AIS target identification transmission, this transmission may contain position, heading and speed information. This information can then be used to verify or correct the predicted position of the off-screen target in relation to the aircraft.

To add further functionality, a plurality of TWS system control softkeys (not shown) is disposed around the main window 36. By using the softkeys together with the joystick (not shown) and a display panel mounted keypad (not shown), targets can be classified (or reclassified) as unknown, national, foreign, special interest etc. using "point and click" techniques.

Finally, coastline maps may be overlaid upon the radar display from stored digital charts and further areas of the sector scanning radar display apparatus 16 are reserved for aircraft and target data reporting, operator prompts and messages.

### (b) Operation of Sector Scanning Radar Display Apparatus

As a host aircraft moves past a target vessel the on-board radar system calculates the present position, slant range and bearing, surface speed and heading of the target vessel. These data are used to predict the movement of the target vessel and the position of the target vessel while it is out of range of the sector scanning radar apparatus. The movement of a target vessel is predicted using an algorithm such as a Kalman/adaptive filter. The predictions of the target vessel's movements are stored in the sector scanning radar system's control unit processor.

The sector scanning radar display unit displays the predictions of the target vessel's movements in the North-up sub-window in real-time in the same manner as it would display the movements of target vessel detected by a circular scanning MSR system in a conventional North up display. This ensures that the operator is made aware of the position and projected movement of the off-screen target vessels.

In addition, the sector scanning radar display apparatus employs the TWS procedure to recognise a previously off-screen target vessel in the event that a search pattern returns the host-aircraft to the vicinity of the target. In this case the sector scanning radar display apparatus uses the TWS algorithms to differentiate the target from other vessels and re-assigns a relevant previously used identifier to the target.

The sector scan radar display apparatus also employs well-known detection algorithms to improve the detection of weak targets in poor signal to noise conditions by reducing the effects of radar clutter and wave returns.

Figure 5 provides an overview of the operations of the sector scanning radar display apparatus. In a first step an operator is provided with the option to include the North-up 360° display sub-window within the conventional stabilised aircraft display main window. If the user has selected a 360° display mode 60, the North-up display sub-window is opened in the sector scanning radar display unit main window. The angular width of the sector scanned by the radar is then shown 62 in the North-up display sub-window together with the heading of the host aircraft. If a target vessel is detected within the sector scanning radar detection field the return signals from the target vessel are acquired 64 and processed using detection algorithms 66. The processed data are then used to calculate the target vessel's speed and heading and the resulting calculations are used to track the target vessel 68. The position of the target vessel relative to the host aircraft is then displayed on the North-up display sub-window and the aircraft stabilised main window 70.

If a previously detected target vessel is no longer within the sector scanning radar detection field, tracking routines are used to predict the position of the target vessel 72, 74. The predicted positions of all the out of range target vessels are then displayed in the North-up display sub-window 76, together with the on-screen target vessels.

Concurrently, an AIS receiver 78 receives AIS transmissions within range of the aircraft and an AIS processor 80 calculates or extracts position information from the AIS transmissions as well as other relevant information. The extracted positions and other information is then passed to the on-screen and off-screen target position calculations to correlate current and past radar targets with AIS transmission positions. Correlated targets then have the AIS information associated with them and are displayed accordingly.

The advantages of the present invention are numerous. For example:
the operator of the present invention will at a glance be able to recognise legitimate surface targets, such as ferries, oil tankers, cruise ships, and navy vessels, as they will be indicated by their target identification transmissions;
by identifying Radar returns that have a target identification against them the operator is able to preclude them from his search, thus reducing the mission flight time of a maritime patrol aircraft which is finite and costly;
the combination of the radar targets with the processed target identification transmission information will leave out the targets with no identification as a radar only target, this means that the surface target is either unwilling, unable, uncooperative or below certain mandatory IMO requirements, which may merit further investigation; and
a system such as the present invention mounted in an aircraft has significantly better line of sight than that meant for ship to ship and therefore can provide wide area coverage identifying by radar and target identification transmission for use onboard or for onwards transmission to other stations.

Improvements and modifications can be made to the above without departing from the scope of the invention.

## Claims

1. A radar display and processing apparatus adapted to emit a radar signal across a range and detect a return signal within said range, predict and display the positions of a first plurality of targets (50, 52) currently out of said range and previously detected by said return signal, **characterised in that** the positions of said first plurality of targets (50, 52) are predicted from at least one radar return signal previously detected from the first plurality of targets (50, 52) within said range and the apparatus further comprising a receiver (36) adapted to detect one or more target identification transmissions, which include latitude and longitude co-ordinates enabling precise location of targets, and a correlation means to correlate each received target identification transmission with one of the plurality of targets (50, 52) and wherein latitude and longitude co-ordinates from the target identification transmissions are used to update the predicted positions of the first plurality of targets (50, 52) currently out of said range.

2. An apparatus as claimed in claim 1, wherein the radar display and processing apparatus displays the positions of a second plurality of targets (40, 42) being currently detected targets and the first plurality of targets (50, 52) wherein the first plurality of targets (50, 52) and the second plurality of targets (40, 42) are disposed at 360° around the radar display and processing apparatus.

3. An apparatus as claimed in claim 1 or claim 2, wherein the radar display and processing apparatus employs a tracking algorithm to predict the position of the first plurality of targets (50, 52).

4. An apparatus as claimed in any preceding claim, wherein the target identification transmission includes identification data and each of the plurality of targets which has been correlated with a target identification transmission is displayed on the radar display (30) along with the identification data.

5. An apparatus as claimed in any preceding claim, wherein the target identification transmissions are Automatic Identification System (AIS) transmissions from waterborne vessels.

6. An apparatus as claimed in any preceding claim, wherein each of the plurality of targets which have not been correlated with a target identification transmission is indicated on the radar display (30) as not transmitting a target identification transmission.

7. An apparatus as claimed in any preceding claim, wherein the radar display and processing apparatus is for use with a sector scanning radar apparatus.

8. An apparatus as claimed in any of claims 1 to 6, wherein the radar display and processing apparatus is for use with a 360 degree circular scanning radar apparatus.

9. An apparatus as claimed in any preceding claim, wherein the radar display and processing apparatus is mounted in an aircraft.

10. An apparatus as claimed in any preceding claim, wherein the radar display and processing apparatus comprises a North-up display.

11. An apparatus as claimed in any preceding claim, wherein the radar display and processing apparatus also comprises an aircraft stabilised radar display.

12. An apparatus as claimed in any preceding claim, wherein the radar display and processing apparatus is used for maritime surveillance.

13. A method of providing information regarding a first plurality of targets (50, 52) and a second plurality (40, 42) of targets disposed at 360° around a sector scanning radar apparatus, the first plurality of targets (50, 52) were previously detected by the sector scanning radar apparatus but are currently out of range of the sector scanning radar apparatus and the second plurality of targets (40, 42) are currently detected by the sector scanning radar apparatus; **characterised in that** the method of providing information regarding the first and second plurality of targets comprises the steps of:- detecting the return signals from at least one of said second plurality of targets (40, 42);
displaying the positions of the at least one of said second plurality of targets (40, 42);
using a previously detected return signal from at least one of said first plurality of targets (50, 52) to predict the position of the at least one of said first plurality of targets (50, 52);
displaying the positions of said first plurality of targets (50, 52); correlating the first and second plurality of targets with target identification transmissions, which include latitude and longitude co-ordinates enabling precise location of targets, from one or more of the first and second plurality of targets;
updating the predicted positions of the first plurality of targets (50, 52) currently out of said range using the latitude and longitude co-ordinates from the target identification transmissions; and
displaying target identification data from the target identification transmissions for each of the correlated first and second plurality of targets.

14. A method as claimed in claim 13, wherein the method of providing information regarding a first plurality of targets (50, 52) and a second plurality of targets (40, 42) disposed at 360° around a sector scanning radar apparatus also comprises a step of recognising at least one of the first plurality of targets (50, 52) that is currently detected by the sector scanning radar apparatus.

## Patentansprüche

1. Eine Radaranzeige- und Verarbeitungsvorrichtung, die angepasst ist, um ein Radarsignal über eine Reichweite zu emittieren und ein Rücksignal innerhalb dieser Reichweite zu erfassen, die Positionen einer ersten Vielzahl von Zielen (50, 52), die sich gegenwärtig außerhalb der Reichweite befinden und die zuvor durch das Rücksignal erfasst worden sind, vorherzusagen und anzuzeigen, **dadurch gekennzeichnet, dass** die Positionen der ersten Vielzahl von Zielen (50, 52) von mindestens einem zuvor innerhalb der Reichweite von der ersten Vielzahl von Zielen (50, 52) erfassten Rücksignal vorhergesagt werden und dass die Vorrichtung ferner einen Empfänger (36), der angepasst ist, um eine oder mehrere Übertragungen der Zielidentifizierung zu erfassen, die Breiten- und Längenkoordinaten, welche die genaue Ortsbestimmung der Ziele ermöglichen, umfassen, und ein Korrelationsmittel zum Korrelieren jeder empfangenen Übertragung der Zielidentifizierung mit einem der Vielzahl von Zielen (50, 52) beinhaltet, und wobei die Breiten- und Längenkoordinaten von den Übertragungen der Zielidentifizierung verwendet werden, um die vorhergesagten Positionen der ersten Vielzahl von Zielen (50, 52), die sich gegenwärtig außerhalb der Reichweite befinden, zu aktualisieren.

2. Vorrichtung gemäß Anspruch 1, wobei die Radaranzeige- und Verarbeitungsvorrichtung die Positionen einer zweiten Vielzahl von Zielen (40, 42), die gegenwärtig erfasste Ziele darstellen, und die erste Vielzahl von Zielen (50, 52) anzeigt, wobei die erste Vielzahl von Zielen (50, 52) und die zweite Vielzahl von Zielen (40, 42) in 360° um die Radaranzeige- und Verarbeitungsvorrichtung angeordnet sind.

3. Vorrichtung gemäß Anspruch 1 oder Anspruch 2, wobei die Radaranzeige- und Verarbeitungsvorrichtung einen Tracking-Algorithmus einsetzt, um die Position der ersten Vielzahl von Zielen (50, 52) vorherzusagen.

4. Vorrichtung gemäß einem der vorhergehenden Ansprüche, wobei die Übertragung der Zielidentifizierung Identifikationsdaten umfasst und jedes der Vielzahl von Zielen, das mit einer Übertragung der Zielidentifizierung korreliert worden ist, auf der Radaranzeige (30) zusammen mit den Identifikationsdaten angezeigt wird.

5. Vorrichtung gemäß einem der vorhergehenden Ansprüche, wobei die Übertragungen der Zielidentifizierung AIS (Automatisches Identifikationssystem)-Übertragungen von Fahrzeugen auf dem Wasser sind.

6. Vorrichtung gemäß einem der vorhergehenden Ansprüche, wobei jedes der Vielzahl von Zielen, die nicht mit einer Übertragung der Zielidentifizierung korreliert worden sind, auf der Radaranzeige (30) als keine Übertragung der Zielidentifizierung übertragend angegeben wird.

7. Vorrichtung gemäß einem der vorhergehenden Ansprüche, wobei die Radaranzeige- und Verarbeitungsvorrichtung zur Verwendung mit einer Sektor abtastenden Radarvorrichtung dient.

8. Vorrichtung gemäß einem der Ansprüche 1 bis 6, wobei die Radaranzeige- und Verarbeitungsvorrichtung zur Verwendung mit einer 360 Grad kreisförmig abtastenden Radarvorrichtung dient.

9. Vorrichtung gemäß einem der vorhergehenden Ansprüche, wobei die Radaranzeige- und Verarbeitungsvorrichtung in einem Luftfahrzeug montiert ist.

10. Vorrichtung gemäß einem der vorhergehenden Ansprüche, wobei die Radaranzeige- und Verarbeitungsvorrichtung eine nordorientierte Anzeige beinhaltet.

11. Vorrichtung gemäß einem der vorhergehenden Ansprüche, wobei die Radaranzeige- und Verarbeitungsvorrichtung ebenfalls eine für das Luftfahrzeug stabilisierte Radaranzeige beinhaltet.

12. Vorrichtung gemäß einem der vorhergehenden Ansprüche, wobei die Radaranzeige- und Verarbeitungsvorrichtung zur maritimen Überwachung verwendet wird.

13. Ein Verfahren zur Bereitstellung von Informationen bezüglich einer ersten Vielzahl von Zielen (50, 52) und einer zweiten Vielzahl (40,42) von Zielen, die in 360° um eine Sektor abtastende Radarvorrichtung angeordnet sind, wobei die erste Vielzahl von Zielen (50, 52) zuvor durch die Sektor abtastende Radarvorrichtung erfasst wurde, sich aber gegenwärtig außerhalb der Reichweite der Sektor abtastenden Radarvorrichtung befindet und die zweite Vielzahl von Zielen (40, 42) gegenwärtig von der Sektor abtastenden Vorrichtung erfasst wird; **dadurch gekennzeichnet, dass** das Verfahren zur Bereitstellung von Informationen bezüglich der ersten und zweiten Vielzahl von Zielen die folgenden Schritte beinhaltet:
Erfassen der Rücksignale von mindestens einem der zweiten Vielzahl von Zielen (40, 42);
Anzeigen der Positionen des mindestens einen der zweiten Vielzahl von Zielen (40, 42);
Verwenden eines zuvor erfassten Rücksignals von mindestens einem der ersten Vielzahl von Zielen (50, 52), um die Position von dem mindestens einen der ersten Vielzahl von Zielen (50, 52) vorherzusagen;
Anzeigen der Positionen der ersten Vielzahl von Zielen (50, 52);
Korrelieren der ersten und zweiten Vielzahl von Zielen mit Übertragungen der Zielidentifizierung, die Breiten- und Längenkoordinaten, welche die genaue Ortsbestimmung der Ziele von einem oder mehreren der ersten und zweiten Vielzahl von Zielen ermöglichen, umfassen;
Aktualisieren der vorhergesagten Positionen der ersten Vielzahl von Zielen (50, 52), die sich gegenwärtig außerhalb der Reichweite befinden, unter Verwendung der Breiten- und Längenkoordinaten von den Übertragungen der Zielidentifizierung; und
Anzeigen der Zielidentifikationsdaten von den Übertragungen der Zielidentifizierung für jedes der korrelierten ersten und zweiten Vielzahl von Zielen.

14. Verfahren gemäß Anspruch 13, wobei das Verfahren zur Bereitstellung von Informationen bezüglich einer ersten Vielzahl von Zielen (50, 52) und einer zweiten Vielzahl von Zielen (40, 42), angeordnet in 360° um eine Sektor abtastende Radarvorrichtung, ebenfalls einen Schritt des Erkennens von mindestens einem einer Vielzahl von Zielen (50, 52), das gegenwärtig durch die Sektor abtastende Radarvorrichtung erfasst wird, beinhaltet.

## Revendications

1. Un appareil de traitement et d'affichage radar adapté pour émettre un signal radar sur une portée et détecter un signal de retour au sein de ladite portée, prédire et afficher les positions d'une première pluralité de cibles (50, 52) à présent hors de ladite portée et détectées précédemment par ledit signal de retour, **caractérisé en ce que** les positions de ladite première pluralité de cibles (50, 52) sont prédites à partir d'au moins un signal radar de retour détecté précédemment à partir de la première pluralité de cibles (50, 52) au sein de ladite portée et l'appareil comprenant de plus un récepteur (36) adapté pour détecter une ou plusieurs transmissions d'identification de cibles, lesquelles comportent des coordonnées de latitude et de longitude permettant la localisation précise de cibles, et un moyen de corrélation pour mettre en corrélation chaque transmission d'identification de cible reçue avec une cible parmi la pluralité de cibles (50, 52) et où des coordonnées de latitude et de longitude provenant des transmissions d'identification de cibles sont utilisées pour mettre à jour les positions prédites de la première pluralité de cibles (50, 52) à présent hors de ladite portée.

2. Un appareil tel que revendiqué dans la revendication 1, où l'appareil de traitement et d'affichage radar affiche les positions d'une deuxième pluralité de cibles (40, 42), lesquelles sont des cibles détectées à présent, et la première pluralité de cibles (50, 52) où la première pluralité de cibles (50, 52) et la deuxième pluralité de cibles (40, 42) sont disposées sur 360° autour de l'appareil de traitement et d'affichage radar.

3. Un appareil tel que revendiqué dans la revendication 1 ou la revendication 2, où l'appareil de traitement et d'affichage radar emploie un algorithme de poursuite pour prédire la position de la première pluralité de cibles (50, 52).

4. Un appareil tel que revendiqué dans n'importe quelle revendication précédente, où la transmission d'identification de cible comporte des données d'identification et chaque cible parmi la pluralité de cibles qui a été mise en corrélation avec une transmission d'identification de cible est affichée sur l'affichage radar (30) conjointement avec les données d'identification.

5. Un appareil tel que revendiqué dans n'importe quelle revendication précédente, où les transmissions d'identification de cibles sont des transmissions de Système d'Identification Automatique (SIA) provenant de vaisseaux en mer.

6. Un appareil tel que revendiqué dans n'importe quelle revendication précédente, où chaque cible parmi la pluralité de cibles qui n'ont pas été mises en corrélation avec une transmission d'identification de cible est indiquée sur l'affichage radar (30) comme ne transmettant pas de transmission d'identification de cible.

7. Un appareil tel que revendiqué dans n'importe quelle revendication précédente, où l'appareil de traitement et d'affichage radar est destiné à être utilisé avec un appareil radar à balayage de secteur.

8. Un appareil tel que revendiqué dans n'importe lesquelles des revendications 1 à 6, où l'appareil de traitement et d'affichage radar est destiné à être utilisé avec un appareil radar à balayage circulaire sur 360 degrés.

9. Un appareil tel que revendiqué dans n'importe quelle revendication précédente, où l'appareil de traitement et d'affichage radar est monté dans un aéronef.

10. Un appareil tel que revendiqué dans n'importe quelle revendication précédente, où l'appareil de traitement et d'affichage radar comprend un affichage Nord en haut.

11. Un appareil tel que revendiqué dans n'importe quelle revendication précédente, où l'appareil de traitement et d'affichage radar comprend aussi un affichage radar stabilisé pour aéronef.

12. Un appareil tel que revendiqué dans n'importe quelle revendication précédente, où l'appareil de traitement et d'affichage radar est utilisé pour la surveillance maritime.

13. Une méthode pour fournir des informations concernant une première pluralité de cibles (50, 52) et une deuxième pluralité (40, 42) de cibles disposées sur 360°autour d'un appareil radar à balayage de secteur, la première pluralité de cibles (50, 52) ayant été détectées précédemment par l'appareil radar à balayage de secteur mais étant à présent hors de portée de l'appareil radar à balayage de secteur et la deuxième pluralité de cibles (40, 42) étant à présent détectées par l'appareil radar à balayage de secteur ; **caractérisée en ce que** la méthode pour fournir des informations concernant les première et deuxième pluralités de cibles comprend les étapes consistant à :
détecter les signaux de retour provenant d'au moins une cible parmi ladite deuxième pluralité de cibles (40, 42) ;
afficher les positions d'au moins cette cible parmi ladite deuxième pluralité de cibles (40, 42) ;
utiliser un signal de retour détecté précédemment à partir d'au moins une cible parmi ladite première pluralité de cibles (50, 52) pour prédire la position d'au moins cette cible parmi ladite première pluralité de cibles (50, 52) ;
afficher les positions de ladite première pluralité de cibles (50, 52) ;
mettre en corrélation les première et deuxième pluralités de cibles avec des transmissions d'identification de cibles, lesquelles comportent des coordonnées de latitude et de longitude permettant la localisation précise de cibles, provenant d'une ou de plusieurs cibles parmi les première et deuxième pluralités de cibles ;
mettre à jour les positions prédites de la première pluralité de cibles (50, 52) à présent hors de ladite portée à l'aide des coordonnées de latitude et de longitude provenant des transmissions d'identification de cibles ; et
afficher des données d'identification de cibles provenant des transmissions d'identification de cibles pour chaque pluralité de cibles parmi les première et deuxième pluralités de cibles corrélées.

14. Une méthode telle que revendiquée dans la revendication 13, où la méthode pour fournir des informations concernant une première pluralité de cibles (50, 52) et une deuxième pluralité de cibles (40, 42) disposées sur 360° autour d'un appareil radar à balayage de secteur comprend aussi une étape consistant à reconnaître au moins une cible parmi la première pluralité de cibles (50, 52) qui est à présent détectée par l'appareil radar à balayage de secteur.
